# EUROPEAN PATENT APPLICATION

(11) **EP 2 136 245 A1**
(43) Date of publication of application: **23.12.2009**
(21) Application number: 07850342.2
(22) Date of filing: 10.12.2007
(51) Int. Cl.: G02F 1/13357, F21S 2/00, F21V 3/00, F21Y 103/00

(54) **ILLUMINATING APPARATUS FOR DISPLAY APPARATUS, DISPLAY APPARATUS AND TELEVISION RECEIVING APPARATUS**

(30) Priority: 09.04.2007 JP 2007102035
(71) Applicant: Sharp Kabushiki Kaisha, Osaka-shi, Osaka 545-8522 (JP)
(72) Inventor: KUROMIZU, Yasumori, Osaka 545-8522 (JP)
(74) Representative: Müller - Hoffmann & Partner
(86) International application number: PCT/JP2007/073768
(87) International publication number: WO 2008/129724

(57) **Abstract**

The present invention includes: a chassis 13 housing a cold cathode tube 15; a planar optical member 16 provided on an emission side of a light emitted from the cold cathode tube 15; and a support portion 27 that is mounted to the chassis 13 and can support the optical member 16 from the side of the cold cathode tube 15, wherein a plurality of the support portions 27 have point shapes with respect to a surface of the optical member 16, are arranged in the surface in a distributed manner, and include a lower support portion 27L and a higher support portion 27H that support the optical member 16 at different heights, and the lower support portion 27 is placed on a middle side of the optical member 16 and the higher support portion 27 is placed on an end side of the optical member 16.

## Description

### Technical Field

The present invention relates to a lighting device for a display device, a display device, and a television receiver apparatus.

### Background Art

A liquid crystal display device includes a liquid crystal panel, and a backlight provided on a back surface side of the liquid crystal panel. The backlight includes a chassis housing a light source such as a cold cathode tube and having an opening surface on a light emitting side, and an optical member provided in an opening portion of the chassis and having a function of converting a light emitted from the light source into a uniform planar light.

The optical member includes a diffuser plate containing a plurality of diffusing particles dispersed in a transparent base material having a predetermined thickness, and an outer peripheral end portion thereof is received and supported by a catch in the chassis. Meanwhile, a more inner portion than the outer peripheral end portion of the diffuser plate is supported by a support component mounted to the chassis.

A known example of such a support component is described in Patent Document 1. This support component includes a support pin protruding toward a diffuser plate, and a tip portion of the support pin abuts at a point against a more inner portion than an outer peripheral end portion of the diffuser plate to support the diffuser plate. A plurality of support pins are arranged so as to support the diffuser plate in different positions in a plane direction.

Meanwhile, an example of a support component using a surface emitting flat lamp as a light source is described in Patent Document 2. This support component includes a linear support portion having a top extending in one direction, and linearly supports a diffuser plate.
[Patent Document 1] Japanese Patent Laid-Open No. 2004-219838
[Patent Document 2] Japanese Patent Laid-Open No. 2005-203164

### (Problems to be Solved by the Invention)

The above described diffuser plate is sometimes warped into an arc shape toward a light source as the light source is lit and a temperature in the chassis is increased. However, since the support pins described in Patent Document 1 all have the same height, the diffuser plate may be bent into a corrugated shape toward the light source with a support position by each support pin as a fulcrum. Then, the corrugated bent portion may significantly reduce display quality of a liquid crystal display device.

Meanwhile, the support portion described in Patent Document 2 linearly supports the diffuser plate, and the diffuser plate is hard to be bent as described above in an extending direction of the support portion. However, since the support portion has a fixed height over the entire length, the diffuser plate to be warped and deformed toward the light source may press the support portion to cause a problem such as a groan.

### Disclosure of the Invention

The present invention is achieved in view of the above described circumstances and has an object to properly support an optical member.

### (Means for Solving the Problems)

The present invention includes: a chassis housing a light source that applies a light to a display panel that displays an image; a planar optical member provided on an emission side of the light emitted from the light source; and a support portion that is mounted to the chassis and can support the optical member from the side of the light source, wherein a plurality of the support portions have point shapes with respect to a surface of the optical member, are arranged in the surface in a distributed manner, and include a lower support portion and a higher support portion that support the optical member at different heights, and the lower support portion is placed on a middle side of the optical member and the higher support portion is placed on an end side of the optical member.

If the optical member is warped and deformed toward the light source as the light source is lit or the like, the optical member is shaped to become lower from the end side toward the middle side. At this time, the plurality of support portions having the point shapes with respect to the surface of the optical member and arranged in the surface in a distributed manner include the lower support portion and the higher support portion that support the optical member at different heights, and the middle side of the optical member is supported by the lower support portion and the end side is supported by the higher support portion, thereby allowing the optical member to be supported in a position matching the warped shape. Thus, the optical member can be supported in a state where the optical member can be warped and deformed and the optical member is hard to be bent.

The following configurations are preferable as illustrative aspects of the present invention.
(1) The support portions are configured to support the optical member at gradually increasing heights from the middle side toward the end side of the optical member. This allows the warped and deformed optical member to be supported at a more proper height.

(2) The support portions are arranged in a zigzag manner. Thus, the support portions can be efficiently distributed in the surface of the optical member, thereby allowing the optical member to be more properly supported.

(3) When the optical member has a rectangular shape, the support portions are linearly arranged in a short side direction of the optical member. Thus, the optical member can be satisfactorily supported by the support portions linearly arranged in the short side direction thereof.

(4) When the optical member has a rectangular shape, the support portions are linearly arranged in a long side direction of the optical member. Thus, the optical member can be satisfactorily supported by the support portions linearly arranged in the long side direction.

(5) Among the support portions, a support portion placed closest to an end of the optical member and a support portion adjacent thereto support the optical member at the same height. Thus, the number of support portions having the same support height is increased to reduce production costs. The optical member tends to be less warped on the end side than on the middle side, and thus the optical member can be satisfactorily supported even if the support portions having the same support height are provided adjacent to each other on the end side of the optical member.

(6) The support portions are tapered. This can avoid the support portions from blocking the light emitted from the light source.

(7) The support portions have surfaces with white base color. Thus, the light emitted from the light source is reflected by the surfaces of the support portions, thereby increasing use efficiency of the light.

(8) The support portion includes a mounting plate mounted to the chassis, and a light source gripping portion that can grip the light source is provided on the mounting plate in a lateral position of the support portion. This allows the support portion to also have a function of gripping the light source.

(9) The optical member is subjected to previous warping so as to be warped and deformed toward the light source as the light source is lit. This prevents the optical member from being warped and deformed in a reverse direction, thereby allowing the support portion to reliably support the optical member.

(10) The previous warping includes heating treatment of a surface on the side opposite to the light source of a base material of the optical member. This allows previous warping without adding another member to the optical member.

(11) The previous warping includes forming a previous warping layer constituted by beads on one of the surface on the side of the light source and the surface on the opposite side of the base material of the optical member by coating, and one of the previous warping layer and the base material placed on the side of the light source has a linear expansion coefficient higher than that of the other placed on the opposite side. Thus, when the light source is lit, the previous warping layer constituted by the beads causes the optical member to be reliably warped and deformed toward the light source.

(12) The previous warping includes attaching a previous warping layer formed of a sheet material to one of the surface on the side of the light source and the surface on the opposite side of the base material of the optical member, and one of the previous warping layer and the base material placed on the side of the light source has a linear expansion coefficient higher than that of the other placed on the opposite side. Thus, when the light source is lit, the previous warping layer formed of the sheet material causes the optical member to be reliably warped and deformed toward the light source.

### (Advantage of the Invention)

According to the present invention, the optical member can be properly supported.

### Brief Description of the Drawings

Figure 1 is a schematic exploded view of a television receiver apparatus according to Embodiment 1 of the present invention;
Figure 2 is a plan view of a backlight;
Figure 3 is a sectional view taken along the line III-III in Figure 2;
Figure 4 is a sectional view taken along the line IV-IV in Figure 2;
Figure 5 is a sectional view taken along the line V-V in Figure 2;
Figure 6 is a sectional view taken along the line VI-VI in Figure 2;
Figure 7 is a graph showing a relationship between distances from an axis of symmetry L1 and support heights of support portions arranged in a long side direction of an optical member;
Figure 8 is a graph showing a relationship between distances from an axis of symmetry L2 and support heights of support portions arranged in a short side direction of the optical member;
Figure 9 is a sectional view taken along the line III-III in Figure 2 of a diffuser plate being warped and deformed;
Figure 10 is a sectional view taken along the line IV-IV in Figure 2 of the diffuser plate being warped and deformed;
Figure 11 is a sectional view taken along the line V-V in Figure 2 of the diffuser plate being warped and deformed;
Figure 12 is a sectional view taken along the line VI-VI in Figure 2 of the diffuser plate being warped and deformed;
Figure 13 is a sectional view of a liquid crystal display device according to Embodiment 2 of the present invention;
Figure 14 is a sectional view of a diffuser plate being warped and deformed;
Figure 15 is a partial side view of a diffuser plate according to another embodiment (15); and
Figure 16 is a partial side view of a diffuser plate according to a further embodiment (16).

### Description of Symbols

10 ... backlight (lighting device for a display device), 11 ... liquid crystal panel (display panel), 13 ... chassis, 15 ... cold cathode tube (light source), 16 ... optical member, 16A ... diffuser plate, 20 ... support component, 24 ... mounting plate, 26 ... light source gripping portion, 27 ... support portion, 27H ... higher support portion, 27L ... lower support portion, D ... liquid crystal display device (display device), TV ... television receiver apparatus

### Best Mode for Carrying Out the Invention

### <Embodiment 1>

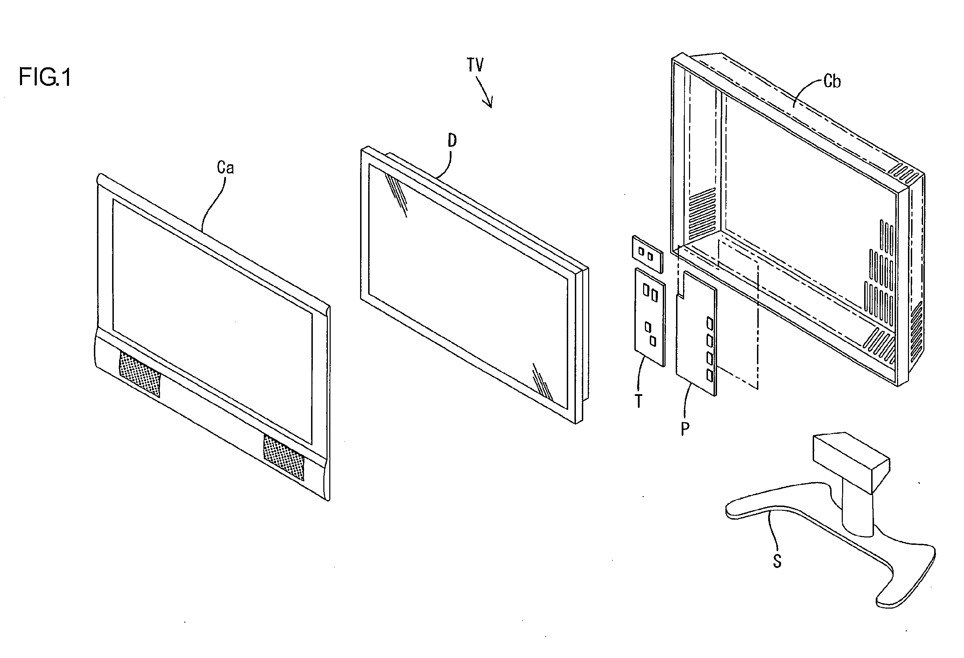

Embodiment 1 of the present invention will be described with reference to Figures 1 to 12. In Embodiment 1, a liquid crystal display device D is exemplified as a display device.

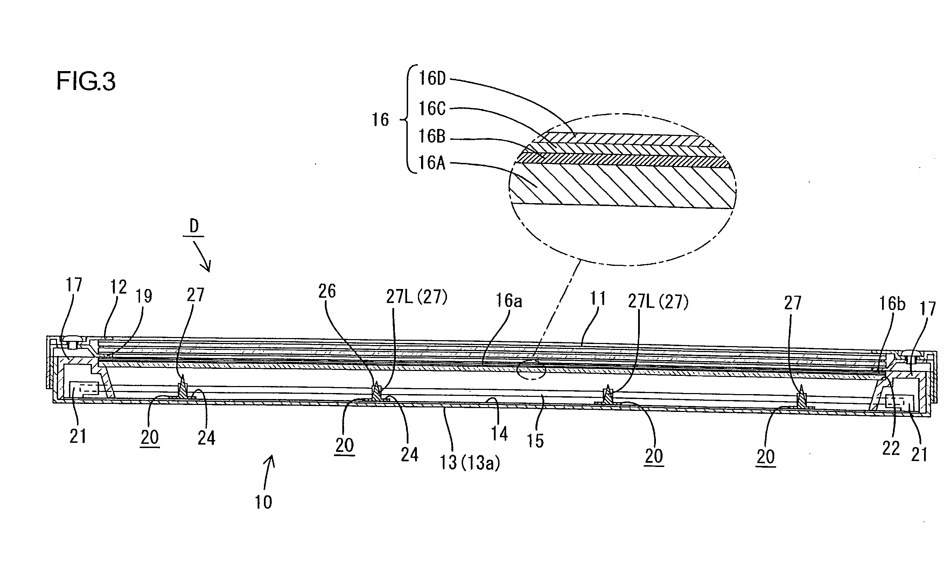

The liquid crystal display device D has a generally horizontally oriented rectangular shape, and includes, as shown in Figure 3, a liquid crystal panel 11 as a display panel and a backlight 10 as an external light source (illumination device) of the liquid crystal panel 11 assembled to each other and held by a bezel 12 placed on a front side. The liquid crystal panel 11 is placed on a front surface side of the backlight 10, and the backlight 10 illuminates the liquid crystal panel 11 from a back surface side. The liquid crystal display device D can be applied to a television receiver apparatus TV. The television receiver apparatus TV includes, as shown in Figure 1, the liquid crystal display device D, front and back cabinets Ca and Cb that sandwich and house the liquid crystal display device D, a power supply P, a tuner T, and a stand S.

As shown in Figure 3, the liquid crystal panel 11 has a known structure in which a liquid crystal that is a substance having varying optical properties with application of a voltage is sealed in a gap between a transparent TFT substrate and a transparent CF substrate. A TFT (Thin Film Transistor) as a switching element connected to source wiring and gate wiring perpendicular to each other is provided on the TFT substrate, and three color filters of red (R), green (G) and blue (B) are arranged in a matrix on the CF substrate. Also, a polarizing plate is attached to the side opposite to the liquid crystal of each substrate.

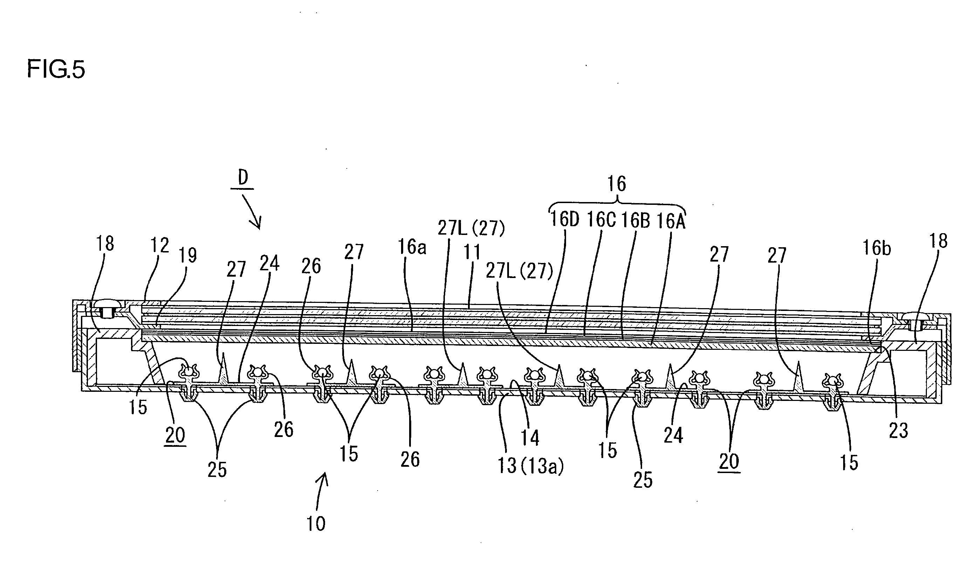

The backlight 10 is of a so-called direct type, and includes a chassis 13 having an opening surface on a front side (an upper side in Figures 3 and 5, a front surface side) that is a light emission side, a reflective sheet 14 laid in the chassis 13, a plurality of cold cathode tubes 15 housed in the chassis 13, an optical member 16 provided in an opening portion of the chassis 13, that is, on the emission side of lights emitted from the cold cathode tubes 15, positioning members (a lamp holder 17, a holder 18, and a frame 19 described later) that can position the optical member 16, and a plurality of support components 20 (lamp clips) that can support the cold cathode tubes 15 and the optical member 16.

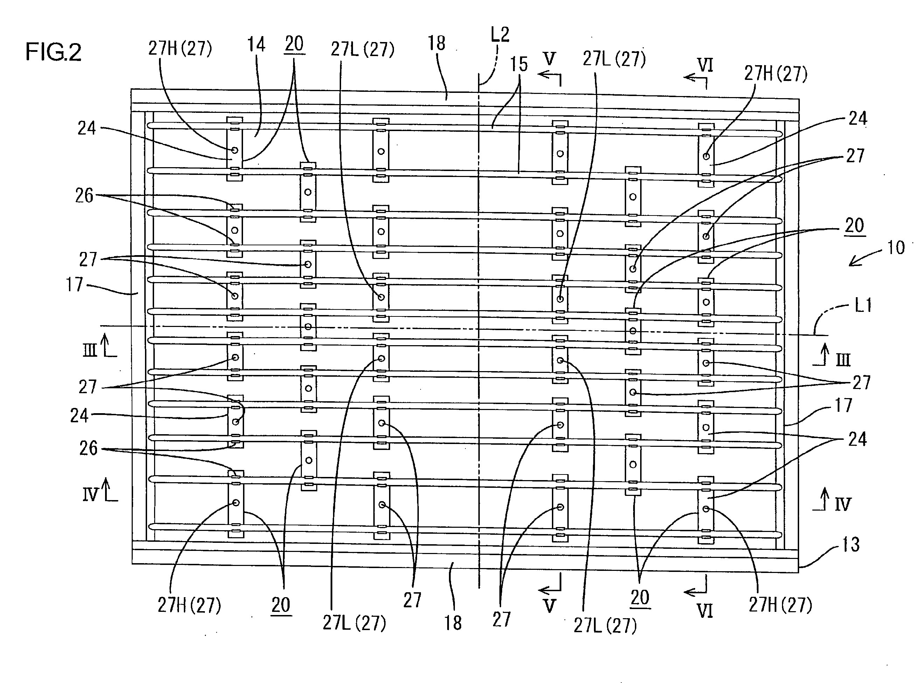

The chassis 13 is made of metal, and formed into a rectangular on plan view and shallow substantially box shape having an opening surface on a front side as shown in Figure 2. The reflective sheet 14 is made of synthetic resin, has a surface with white base color such as white with high reflectivity, and as shown in Figure 3, is laid on an inner surface of the chassis 13 so as to substantially cover the entire inner surface. The reflective sheet 14 can guide the light emitted from each cold cathode tube 15 to the opening portion of the chassis 13.

The cold cathode tube 15 is a kind of elongated linear light source extending in one direction along a bottom plate 13a of the chassis 13 or the plane direction of the optical member 16, and is mounted in the chassis 13 with an axial direction thereof matching a long side direction of the chassis 13. The plurality of cold cathode tubes 15 are arranged axially substantially in parallel with predetermined spaces therebetween. More specifically describing the space (pitch, distance) between adjacent cold cathode tubes 15, as shown in Figures 2 and 5, a space between cold cathode tubes 15 placed in the middle in a short side direction of the chassis 13 or the optical member 16 is smallest, and the space progressively increases therefrom toward end sides. In other words, a density of arrangement of the cold cathode tubes 15 in the chassis 13 is higher on the middle side of a screen, and becomes progressively lower toward end sides of the screen. The cold cathode tubes 15 are arranged symmetrically with respect to an axis of symmetry L1 in a middle position in the short side direction of the chassis 13.

The cold cathode tube 15 is configured so that mercury or the like is sealed in an elongated glass tube having a circular section, an inner wall surface of the tube is coated with a fluorescent material, and electrodes are sealed in opposite end portions. A rubber holder 21 mounted to the chassis 13 is fitted to a non-light-emitting portion at each end of the cold cathode tube 15.

The optical member 16 has a rectangular shape on plan view like the chassis 13 and the liquid crystal panel 11 as shown in Figures 3 and 5, is made of translucent synthetic resin, mounted to the opening portion of the chassis 13 and interposed between the group of cold cathode tubes 15 and the liquid crystal panel 11. The optical member 16 includes a diffuser plate 16A, a diffusion sheet 16B, a lens sheet 16C, and a luminance increasing sheet 16D laminated in order from a back side (a lower side in Figures 3 and 5, a back surface side), and has a function of converting the light emitted from each cold cathode tube 15 as the linear light source into a uniform planar light or the like.
The diffuser plate 16A placed on the backmost side has a sufficiently larger thickness than other sheets 16B to 16D and has relatively high rigidity. The diffuser plate 16A contains a plurality of diffusing particles dispersed in a transparent base material having a predetermined thickness, and is thus formed to be generally translucent.

The diffuser plate 16A is sometimes warped and deformed by an influence of ambient temperature environment or the like. In this case, the sheets 16B to 16D are also deformed following the warped and deformed diffuser plate 16A. If the optical member 16 is warped and deformed toward the liquid crystal panel 11 at this time, the optical member 16 presses the middle portion of the liquid crystal panel 11 to cause poor display. Thus, the diffuser plate 16A is subjected to so-called previous warping so as to have a warping habit to be warped toward the cold cathode tube 15. The previous warping is performed by heating only a surface on the front side (on the side opposite to the cold cathode tube 15) of the base material while the base material passes between upper and lower rollers in a process of producing the diffuser plate 16A. Thus, the diffuser plate 16A has a warping habit such that the heated-side surface is deformed to be recessed (the middle side is retracted from the outer peripheral end portion 16b toward the back side (toward the cold cathode tube 15).

The positioning member includes the lamp holder 17 and the holder 18 that constitute a frame-shaped catch member that receives the outer peripheral end portion 16b of the optical member 16 on the back side, and the frame 19 that constitutes a frame-shaped presser member that presses the outer peripheral end portion 16b of the optical member 16 from the front side.

The lamp holder 17 is made of synthetic resin having a surface with white base color such as white, and as shown in Figures 2 and 3, a pair of lamp holders 17 are mounted to opposite end positions in the long side direction of the chassis 13 and extend in the short side direction of the chassis 13. The lamp holder 17 has a substantially box shape with an opening back surface side so as to collectively cover the rubber holders 21 mounted to the cold cathode tubes 15 from the front side. A catch 22 that can receive the optical member 16 is formed to be recessed with a step in an inner peripheral end portion on a front side surface of the lamp holder 17.

The holder 18 is made of synthetic resin having a surface with white base color such as white, and as shown in Figures 2 and 5, a pair of holders 18 are mounted to opposite end positions in the short side direction of the chassis 13 and extend in the long side direction of the chassis 13. Like the lamp holder 17, a catch 23 for the optical member 16 is formed to be recessed with a step in an inner peripheral end portion on a front side surface of the holder 18.

The frame 19 is made of metal and formed into a frame shape, and as shown in Figures 3 and 5, can press the outer peripheral end portion 16b of the optical member 16 substantially over the entire periphery from the front side. The frame 19 has, in the inner peripheral end portion, a presser surface facing a plate surface of the optical member 16. The presser surface is placed with a slight clearance from a plate surface on the front side of the luminance increasing sheet 16D on the frontmost side in the assembled state, and this allows thermal expansion or contraction of the optical member 16.

A support component 20 is made of synthetic resin, and has an entire surface with white base color such as white with high light reflectivity. As shown in Figures 2 and 5, the support component 20 includes a mounting plate 24 along the bottom plate 13a of the chassis 13, a locking portion 25 protruding from the mounting plate 24 toward a back side, a light source gripping portion 26 protruding from the mounting plate 24 toward a front side (toward the optical member 16), and a support portion 27 protruding from the mounting plate 24 toward the front side like the light source gripping portion 26.

The mounting plate 24 has an elongated plate shape extending in the short side direction of the chassis 13. On a back side surface of the mounting plate 24, a pair of locking portions 25 are provided passing through mounting holes provided in the chassis 13 and lockable to hole edges on the back side. Thus, the support component 20 is held in a mounted state to the chassis 13. In Figures 3, 4, 9 and 10, the locking portions 25 are not shown.

Meanwhile, on a front side surface of the mounting plate 24, a pair of light source gripping portions 26 that can grip the cold cathode tubes 15 are provided. The light source gripping portions 26 are placed substantially in the same positions as the locking portions 25 in the plane direction of the bottom plate 13a of the chassis 13. Each light source gripping portion 26 has a substantially C-shaped section with an opening portion on the front side, and the cold cathode tube 15 is mounted through the opening portion on the front side. The light source gripping portion 26 can be elastically deformed with attachment and detachment of the cold cathode tube 15. Thus, each cold cathode tube 15 can be supported in a position at a predetermined height above the bottom plate 13a of the chassis 13. The length of the mounting plate 24 and an installation position of the light source gripping portion 26 in each support component 20 correspond to the above described mounting position of the cold cathode tube 15 to the chassis 13.

The support portion 27 is provided between the light source gripping portions 26 on the front side surface of the mounting plate 24. An installation position of the support portion 27 is a central position of the mounting plate 24 and a middle position between the light source gripping portions 26. A protrusion height of the support portion 27 is higher than that of the light source gripping portion 26. The support portion 27 has a circular section cut in the plane direction of the diffuser plate 16A, and is tapered to have a decreasing diameter from a base end toward a protruding end. Specifically, the support portion 27 has a generally conical pin shape. This can avoid the support portion 27 from blocking the light emitted from the cold cathode tube 15.

The support portion 27 can support the diffuser plate 16A in a predetermined height position by a tip portion thereof coming into contact with the diffuser plate 16A. The support portion 27 has a substantially point shape with respect to the surface of the diffuser plate 16A. The support portion 27 has a solid structure, and the entire support portion 27 is a secured part (substantially a rigid body) that cannot be elastically deformed. Thus, the diffuser plate 16A is supported vertically (perpendicularly to the plane direction of the diffuser plate 16A (optical member 16) by the support portion 27 in a fixed and unchanged position, that is, at a fixed and unchanged height.

The support components 20 having the above described configuration are arranged on the bottom plate 13a of the chassis 13 as described below. Specifically, as shown in Figure 2, the support components 20 are arranged in a row linearly extending in the short side direction of the chassis 13, and a plurality of the rows are arranged with predetermined spaces therebetween in the long side direction of the chassis 13. For the rows of the support components 20, three rows on the left and three rows on the right are arranged with respect to an axis of symmetry L2 in the middle in the long side direction of the chassis 13 in Figure 2, and these groups of rows are arranged symmetrically. In each of the left and right groups of rows of the support components 20, the support components 20 in the middle row are arranged to be displaced in the short side direction of the chassis 13 from the support components 20 in the rows on the opposite sides thereof. Specifically, in each of the left and right groups of rows, the support components 20 are arranged in a zigzag (staggered) manner. Thus, the support portions 27 provided in the central positions of the support components 20 are also distributed in a zigzag manner in the surface of the diffuser plate 16A, and arranged symmetrically with respect to the axis of symmetry L2.

With the support component 20 being mounted to the chassis 13, the light source gripping portions 26 are placed in mounting positions of the cold cathode tubes 15, and the support portion 27 is placed between adjacent cold cathode tubes 15. At this time, the support portion 27 is placed in a middle position between the adjacent cold cathode tubes 15.

As shown in Figures 3 to 6, the support portions 27 on the support components 20 support the diffuser plate 16A at different heights according to mounting positions to the chassis 13. Specifically, the support portions 27 placed on the middle side of the bottom plate 13a of the chassis 13, that is, the diffuser plate 16A have lower protrusion heights, and the support portions 27 placed on the end side have higher protrusion heights.

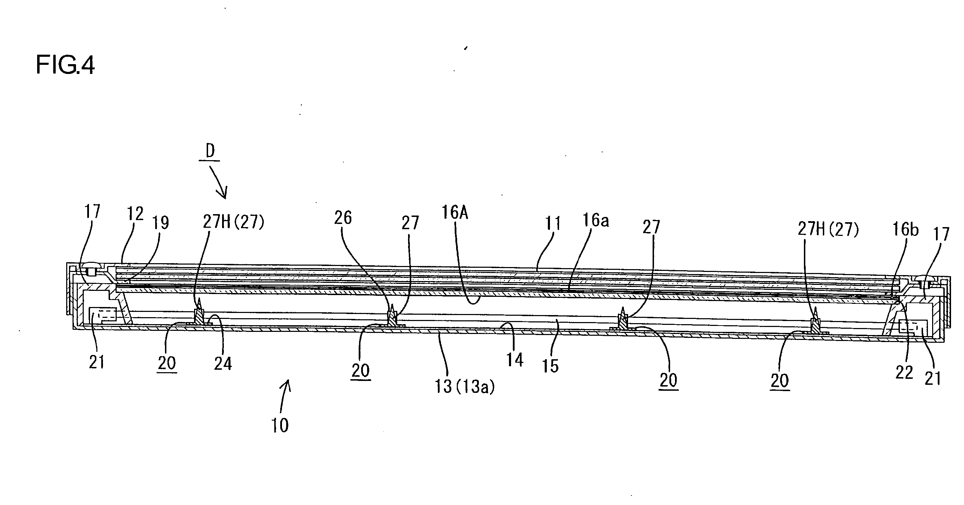

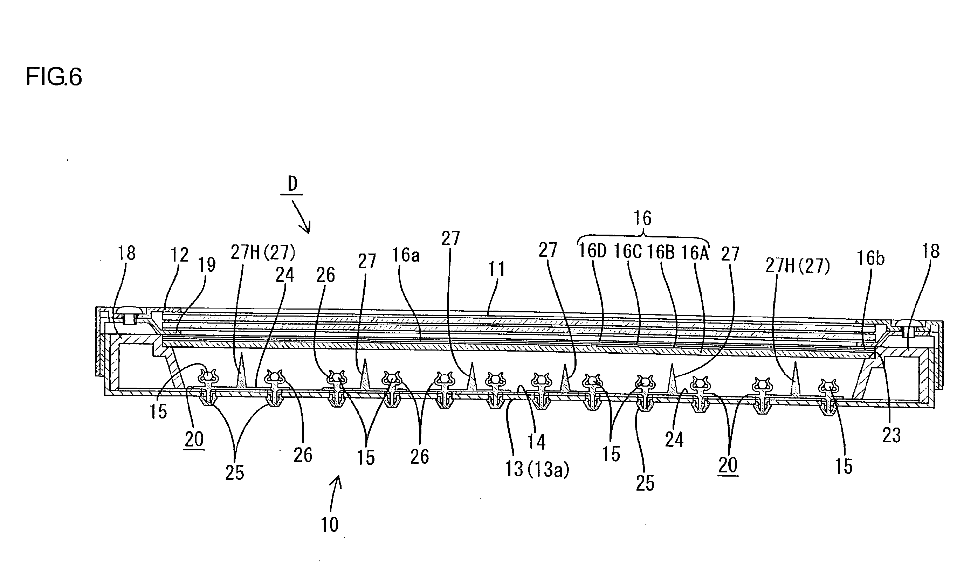

Specifically, among the support portions 27, four support portions 27 placed closest to the ends in the long side direction and the short side direction of the diffuser plate 16A, that is, closest to four corners of the rectangular diffuser plate 16A have the highest height as shown in Figures 4 and 6. These support portions 27 are higher support portions 27H that support the diffuser plate 16A at the highest level of all the support portions. Meanwhile, among the support portions 27, four support portions 27 placed closest to the middle side in the long side direction and the short side direction of the diffuser plate 16A, that is, closest to the central position of the diffuser plate 16A have the lowest height as shown in Figures 3 and 5. These support portions 27 are lower support portions 27L that support the diffuser plate 16A at the lowest level of all the support portions.

The heights of the support portions 27 other than the higher support portions 27H and the lower support portions 27L gradually decrease from the end side toward the middle side in the long side direction and the short side direction of the diffuser plate 16A. In other words, the heights of the support portions 27 decreases with increasing distance from the higher support portions 27H closest to the end, and increases with increasing distance from the lower support portions 27L closest to the middle. Thus, the support portions 27 other than the higher support portions 27H at the highest level and the lower support portions 27L at the lowest level may be lower support portions or higher support portions described in Claims according to which support portion 27 is a comparison target of the support height.

Tip portions of the support portions 27 are connected to form a curve of a gentle arc shape viewed from a lateral side, and the shape of the curve matches the warped shape of the diffuser plate 16A. Specifically, the height positions of the tip portions of the support portions 27 are set in positions matching a supposed warped shape of the diffuser plate 16A.

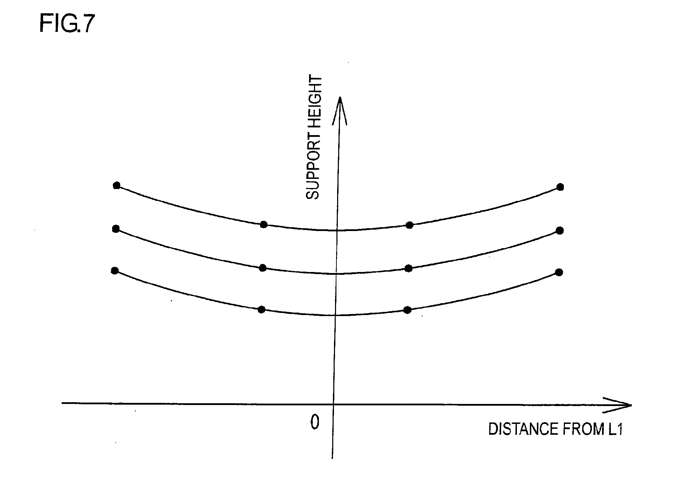

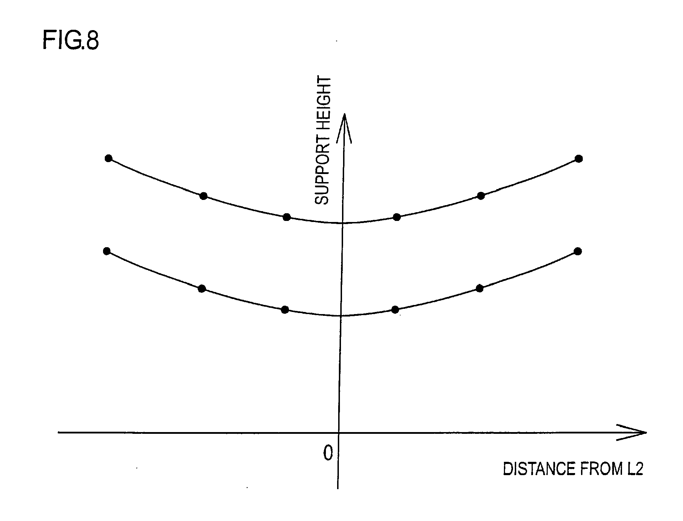

Specifically, for curves obtained by connecting the tip portions of the support portions 27 arranged in the long side direction of the diffuser plate 16A, as shown in Figure 7, a curve of a row on the middle side in the long side direction (a lower curve in Figure 7) is generally lower than a curve of a row on the end side (an upper curve in Figure 7). Similarly, for curves obtained by connecting the tip portions of the support portions 27 arranged in the short side direction of the diffuser plate 16A, as shown in Figure 8, a curve of a row on the middle side in the long side direction (a lower curve in Figure 8) is generally lower than a curve of a row on the end side (an upper curve in Figure 8). The same applies to curves obtained by connecting tip portions of the support portions 27 arranged diagonally with respect to the long side direction and the short side direction of the diffuser plate 16A.

Among the support portions 27, the higher support portions 27H at the highest level are placed at a lower level than the catches 22 and 23 as shown in Figures 4 and 6, and the support portions 27 are placed in a position at a predetermined gap from the back side surface of the diffuser plate 16A in no contact therewith when the diffuser plate 16A is straight and substantially parallel to the bottom plate 13a of the chassis 13, that is, the diffuser plate 16A is not warped. In this state, a gap between the tip portion of the support portion 27 and the back side surface of the diffuser plate 16A is largest in the lower support portion 27L at the lowest level and smallest in the higher support portion 27H. Thus, the optical member 16 can be warped and deformed by the gap ensured between the optical member 16 and the support portion 27. Specifically, the support portion 27 does not support the diffuser plate 16A when the diffuser plate 16A is not warped, and supports the diffuser plate 16A after the diffuser plate 16A is warped.

Meanwhile, the lower support portions 27L at the lowest level among the support portions 27 are placed at a higher level than the cold cathode tube 15 as shown in Figures 3 and 5. Thus, even when the diffuser plate 16A is warped and deformed to the maximum, the diffuser plate 16A is supported by the support portion 27 and thus held in a position at a predetermined gap from the cold cathode tube 15 in no contact therewith. Thus, a lamp image of the cold cathode tube 15 is hard to be visually identified by a user.

The liquid crystal display device D having the above described configuration is produced as described below. The liquid crystal panel 11 and the backlight 10 are individually produced and assembled using the bezel 12 or the like to produce the liquid crystal display device D. In the backlight 10, the reflective sheet 14 is laid in the chassis 13, then each support component 20 is mounted to a predetermined position, and each cold cathode tube 15 having the rubber holders 21 fitted to the opposite ends is mounted, and thus the light source gripping portion 26 of the support component 20 elastically grips the cold cathode tube 15 in a predetermined height position.

Then, when the lamp holder 17 and the holder 18 are mounted in the chassis 13, the optical member 16 is placed on the catches 22 and 23 of the lamp holder 17 and the holder 18 in order of the diffuser plate 16A, the diffusion sheet 16B, the lens sheet 16C, and the luminance increasing sheet 16D. Then, the frame 19 is mounted to position the optical member 16.

In the liquid crystal display device D produced as described above, when each cold cathode tube 15 is lit in use, heat generated from the cold cathode tube 15 increases temperature in the chassis 13. Then, the diffuser plate 16A may be warped depending on the temperature environment. In this case, since the support portions 27 are provided with a predetermined gap therebetween on the back side of the diffuser plate 16A to be ready to receive the diffuser plate 16A, the diffuser plate 16A can be warped and deformed in both the long side direction and the short side direction. Thus, as compared with a device in which a diffuser plate 16A cannot be warped and deformed, a groan is hard to be caused.

The diffuser plate 16A is subjected to previous warping as described above, and thus deformed so that the middle portion thereof is warped and deformed so as to be recessed toward the cold cathode tube 15. At this time, in the diffuser plate 16A, the middle side portion 16a is warped and deformed into an arc shape with the outer peripheral end portions 16b supported by the catches 22 and 23 of the lamp holder 17 and the holder 18 as fulcrums. When the diffuser plate 16A is warped, the sheets 16B to 16D laminated on the front side are warped and deformed following the diffuser plate 16A. At this time, the diffuser plate 16A is warped and deformed only in the long side direction or the short side direction in some cases, and warped and deformed in both the long side direction and the short side direction in other cases.

When the diffuser plate 16A is warped and deformed to some degree, the tip portion of each support portion 27 abuts against the back side surface of the diffuser plate 16A. For the support portions 27 arranged in a distributed manner on the surface of the diffuser plate 16A, the height positions of the tip portions gradually decrease from the end side toward the middle side of the diffuser plate 16A, and thus the diffuser plate 16A can be supported in a height position matching the warped shape in the long side direction.

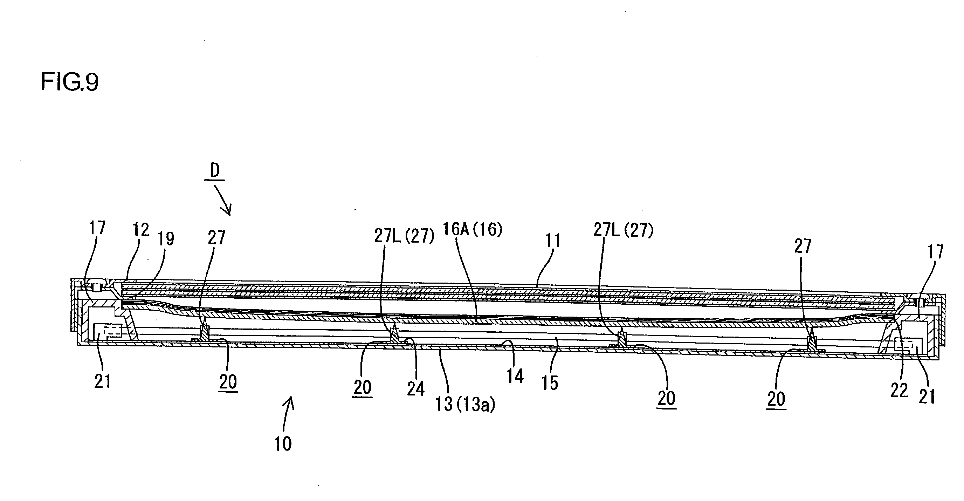

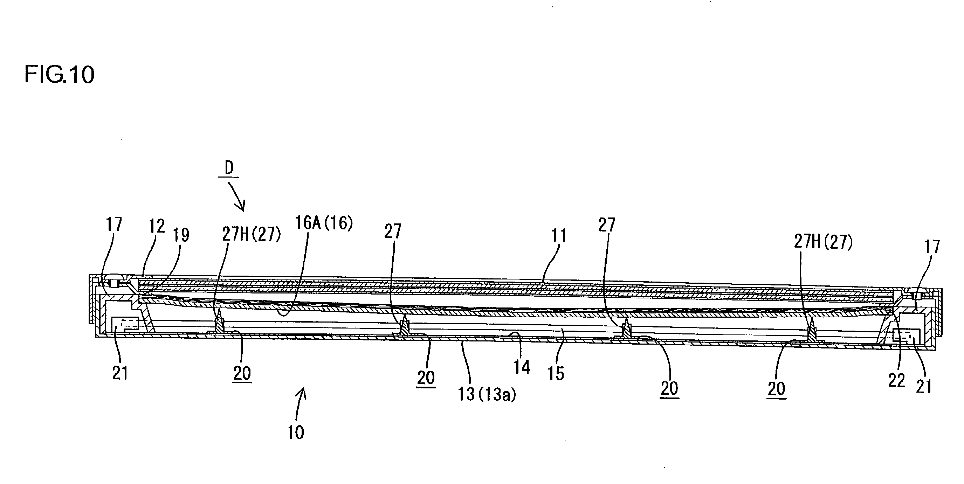

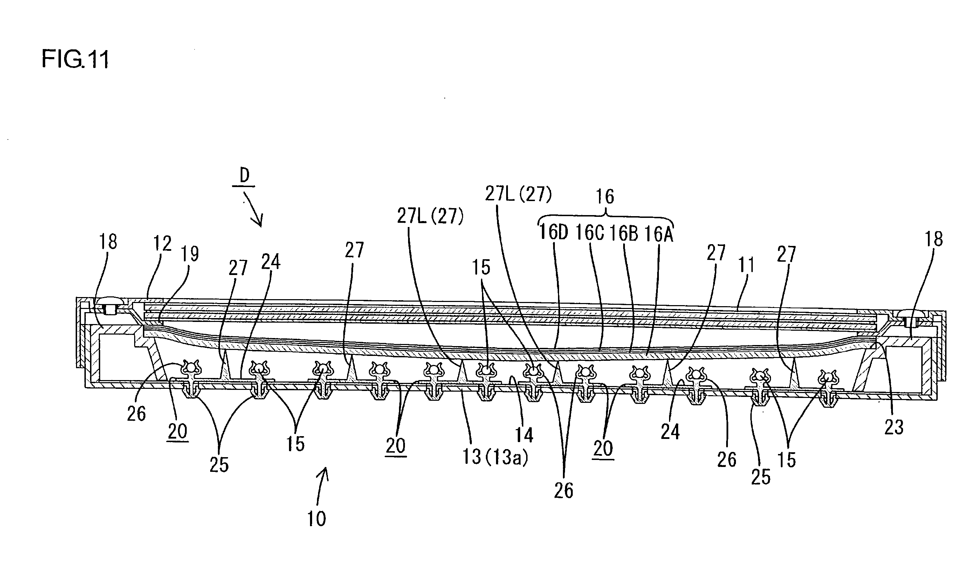

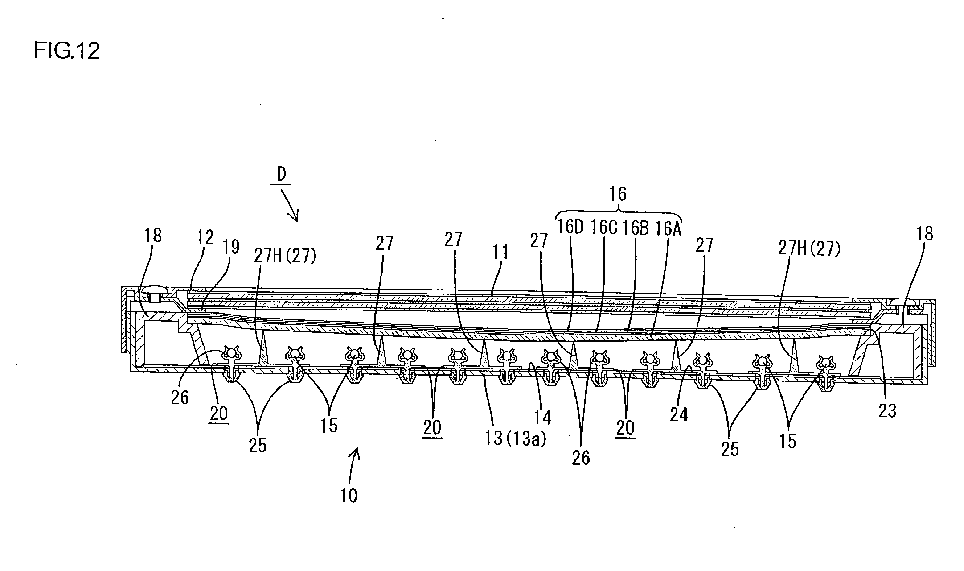

Specifically, when the diffuser plate 16A is warped in the long side direction, as shown in Figures 9 and 10, the support heights of the support portions 27 arranged in the long side direction gradually decrease from the end side toward the middle side, thereby allowing the warped and deformed diffuser plate 16A to be properly supported. Meanwhile, when the diffuser plate 16A is warped in the short side direction, as shown in Figures 11 and 12, the support heights of the support portions 27 arranged in the short side direction gradually decrease from the end side toward the middle side, thereby allowing the warped and deformed diffuser plate 16A to be properly supported. This can control excessive warping deformation of the diffuser plate 16A.

The lower support portion 27L at the lowest level of the support portion 27 is set at a higher level than the cold cathode tube 15, and the diffuser plate 16A is reliably prevented from coming into contact with the cold cathode tube 15. Even when the diffuser plate 16A is warped and deformed to the maximum, a sufficient distance is ensured from the cold cathode tube 15, thereby preventing a so-called lamp image from being visually identified. This can maintain high display quality of the liquid crystal display device D.

Figures 9 to 12 show the case where the diffuser plate 16A is warped to the maximum and abuts against all the support portions 27, but there is a case where some support portions 27 abut against the diffuser plate 16A but the other support portions 27 do not abut against the diffuser plate 16A depending on the warped state of the diffuser plate 16A, and all the support portions 27 do not always abut against the diffuser plate 16A as shown.

As described above, according to this embodiment, the plurality of support portions 27 have the point shapes with respect to the surface of the diffuser plate 16A (optical member 16), are arranged in the surface in the distributed manner, and include the lower support portion 27L and the higher support portion 27H that support the diffuser plate 16A at different heights, and the lower support portion 27L is placed on the middle side of the diffuser plate 16A and the higher support portion 27H is placed on the end side of the diffuser plate 16A, thereby allowing the diffuser plate 16A to be supported in the position matching the warped shape. Thus, the diffuser plate 16A can be supported in a state where the diffuser plate 16A can be warped and deformed and the diffuser plate 16A is hard to be bent, thereby allowing the diffuser plate 16A to be properly supported.

The support portions 27 support the diffuser plate 16A at gradually increasing heights from the middle side toward the end side of the diffuser plate 16A, thereby allowing the warped and deformed diffuser plate 16A to be supported at a more proper support height.

The support portions 27 are arranged in a zigzag manner. Thus, the support portions 27 can be efficiently distributed in the surface of the diffuser plate 16A, thereby allowing the diffuser plate 16A to be more properly supported.

The support portions 27 are linearly arranged in the short side direction of the rectangular diffuser plate 16A, thereby allowing the diffuser plate 16A to be satisfactorily supported.

The support portions 27 are linearly arranged in the long side direction of the rectangular diffuser plate 16A, thereby allowing the diffuser plate 16A to be satisfactorily supported.

The support portions 27 are tapered. This can avoid the support portions 27 from blocking the light emitted from the cold cathode tube 15.

The support portions 27 have surfaces with white base color. Thus, the light emitted from the cold cathode tube 15 can be reflected by the surfaces of the support portions 27 and guided toward the diffuser plate 16A, thereby increasing use efficiency of the light.

The support portion 27 includes the mounting plate 24 mounted to the chassis 13, and the light source gripping portion 26 that can grip the cold cathode tube 15 is provided on the mounting plate 24 in the lateral position of the support portion 27. This allows the support portion 27 to also have a function of gripping the cold cathode tube 15.

The diffuser plate 16A is subjected to previous warping so as to be warped and deformed toward the cold cathode tube 15 as the cold cathode tube 15 is lit. This prevents the diffuser plate 16A from being warped and deformed in a reverse direction, thereby allowing the support portion 27 to reliably support the diffuser plate 16A.

Further, the previous warping includes heating treatment of the surface on the side opposite to the cold cathode tube 15 of the base material of the diffuser plate 16A. This allows previous warping without adding another member to the diffuser plate 16A, and can reduce production costs of the diffuser plate 16A.

### <Embodiment 2>

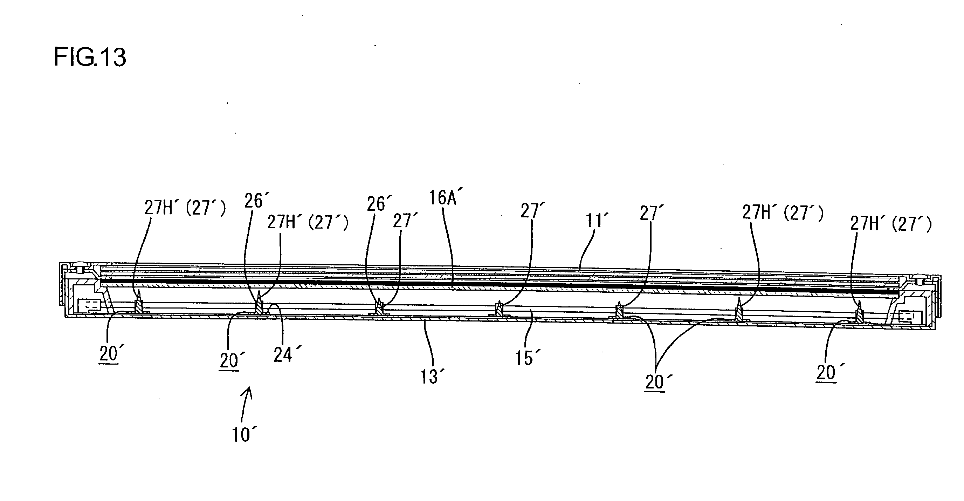

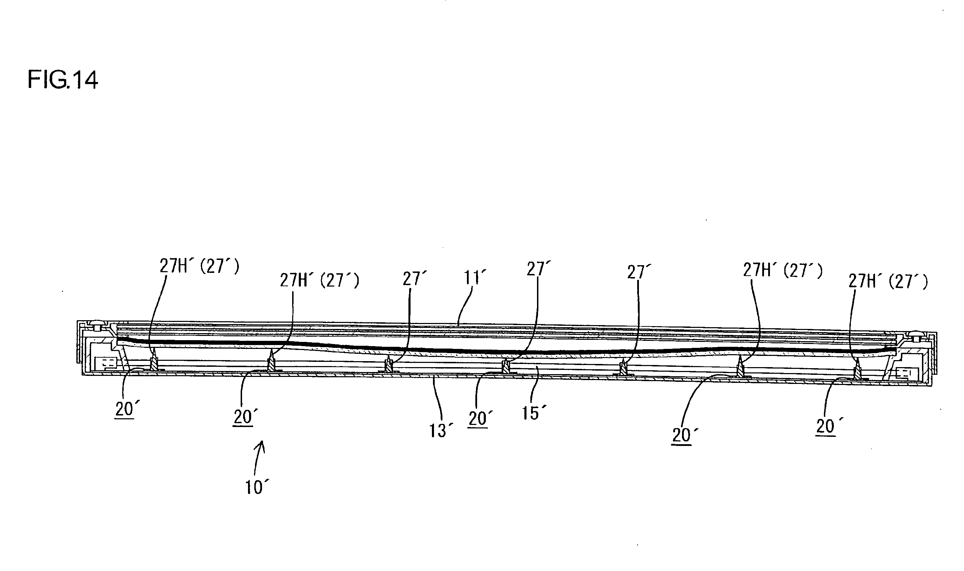

Embodiment 2 of the present invention will be described with reference to Figures 13 and 14. In Embodiment 2, the support height of the support portion is changed. In Embodiment 2, overlapping descriptions will be omitted on the same structure, operation and advantage as those in Embodiment 1.

In a backlight 10', all spaces between cold cathode tubes 15' housed in a chassis 13' are the same though not shown. Thus, a length of a mounting plate 24' of a support component 20' and forming positions of a light source gripping portion 26' and a locking portion on the mounting plate 24' are all the same irrespective of a mounting position of the support component 20' to the chassis 13'. In Embodiment 2, a screen size of a liquid crystal panel 11' is larger than that in Embodiment 1, and thus the number of support components 20' installed is also larger than that in Embodiment 1.

As shown in Figure 13, among support components 20', a support component 20' placed closest to an end of the diffuser plate 16A' and a support component 20' adjacent thereto include support portions 27' of the same height, and have the same shape. Specifically, support portions 27' of support components 20' adjacent to four support components 20' closest to four corners of the diffuser plate 16A' in a long side direction and a short side direction among the support components 20' are higher support portions 27H' at the highest level like the four support components 20' closest to the corners.

When the diffuser plate 16A' is warped as each cold cathode tube 15' is lit, as shown in Figure 14, each support portion 27' abuts against a back surface of the diffuser plate 16A' to support the diffuser plate 16A' at a height matching the warped shape. At this time, the diffuser plate 16A' tends to be less warped on an end side than on a middle side. Thus, the diffuser plate 16A'can be satisfactorily supported even if the higher support portion 27H' having the same support height are provided adjacent to each other on the end side of the diffuser plate 16A' as in this embodiment.

As described above, according to this embodiment, among the support portions 27', the support portion 27' closest to the end of the diffuser plate 16A' and the support portion 27' adjacent thereto support the diffuser plate 16A' at the same height, and the support components 20' including these support portions 27' have the same shape, thereby reducing the number of types of the support components 20' and thus reducing production costs.

### <Other embodiments>

The present invention is not limited to the embodiments described above with reference to the drawings, but the technical scope of the present invention also covers, for example, the following embodiments.

(1) The shape of the support portion may be changed. For example, the support portion may be formed into a pyramidal shape or have a rounded tip portion. Also, the support portion may have a fixed diameter (thickness) over the entire length, and may be formed into a cylindrical or prismatic shape.

(2) The present invention also covers a case where one support component includes a plurality of support portions. In this case, heights of the support portions may be different or the same.

(3) When all the support portions have the different heights as in Embodiment 1, constant pitch arrangement in which all the spaces between the cold cathode tubes are the same may be chosen. Similarly, when some support portions have the same heights as in Embodiment 2, variable pitch arrangement in which the spaces between the cold cathode tubes are variable may be chosen.

(4) The present invention also covers a combination of constant pitch arrangement and variable pitch arrangement for arrangement of the cold cathode tubes, for example, with the constant pitch arrangement on the middle side of the optical member and the variable pitch arrangement on the end side of the optical member.

(5) In the above described embodiments, the cold cathode tubes are arranged symmetrically, but the present invention also covers a case where the cold cathode tubes are arranged asymmetrically.

(6) In the above described embodiments, the tip portion of the higher support portion closest to the end of the diffuser plate is placed at the height in no contact with the diffuser plate that is not warped, but the present invention also covers a case where the tip portion of the higher support portion is located at substantially the same height as the catch of the lamp holder or the holder, and comes into contact with the diffuser plate that is not warped.

(7) In the above described embodiments, the support portion is interposed between the cold cathode tubes, but the support portions do not always need to be provided between all the cold cathode tubes, and the present invention also covers a case with the support portions partially omitted.

(8) In the above described embodiments, the support components and the support portions are arranged in the zigzag manner on the bottom plate of the chassis, but the present invention also covers a case, for example, where the support components and the support portions are arranged in a lattice manner.

(9) In the above described embodiments, the support portions are arranged symmetrically on the bottom plate of the chassis, but the present invention also covers a case where the support portions are arranged asymmetrically.

(10) In the above described embodiments, the support component including the support portions has the white surface, but not limited to white, and for example, other white base colors such as semi-opaque may be chosen. Colors other than the white base color may be chosen.

(11) In the above described embodiments, the light source gripping portion that grips the cold cathode tube is provided in the support component, but the light source gripping portion may be omitted.

(12) In the above described embodiments, the mounting plate is provided on the support component, but the mounting plate may be omitted and a locking portion may be provided on the back surface of the support portion for mounting to the chassis.

(13) In the above described embodiments, the support portion is integrally formed with the support component, but the support portion may be produced separately from a body of the support component and integrated by assembly. Specifically, the body of the support component is formed to have a common structure, and multiple types of support portions are separately formed to have different heights, thereby reducing production costs. The support portion may be integrated with the body of the support component by mechanical joining means such as fitting or chemical joining means such as an adhesive.

(14) In the above described embodiments, as the previous warping of the diffuser plate, heat treatment of one side of the base material is performed in a production process of the diffuser plate, but other methods may be used. Specifically, methods in the following (15) and (16) may be used.

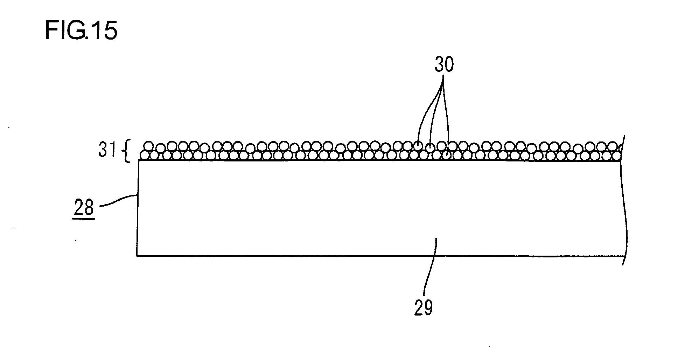

(15) As a specific example of the previous warping, as shown in Figure 15, a previous warping layer 31 constituted by beads 30 is formed on a surface on the side of the liquid crystal panel (the side opposite to the cold cathode tube) of a base material 29 of a diffuser plate 28, and the previous warping layer 31 has a linear expansion coefficient lower than that of the base material 29 placed on the side of the cold cathode tube. Thus, this provides a warping habit to the diffuser plate 28 so as to be reliably warped toward the cold cathode tube when the cold cathode tube is lit and the temperature in the backlight is increased. The previous warping layer 31 is formed by applying or dropping a predetermined solvent mixed with a plurality of beads 30 on a surface of the base material 29, and then volatilizing or draining the solvent. Other than the above, the previous warping layer 31 may be formed on the side of the cold cathode tube of the base material 29, and the previous warping layer 31 placed on the side of the cold cathode tube may have a linear expansion coefficient higher than that of the base material 29.

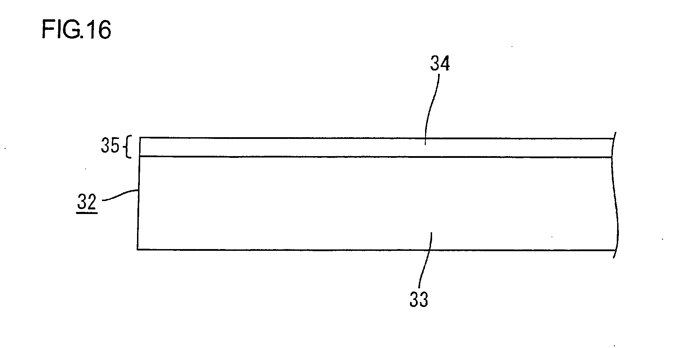

(16) As a specific example of the previous warping, as shown in Figure 16, a previous warping layer 35 formed of a sheet material 34 is formed on the side of the liquid crystal panel of a base material 33 of a diffuser plate 32, and the previous warping layer 35 has a linear expansion coefficient lower than that of the base material 33. Thus, the same advantage of previous warping as in (15) can be obtained. The previous warping layer 35 is formed by attaching a synthetic resin sheet material 34 to a surface of the base material 33, and an adhesive layer (not shown) of an acrylic UV curing adhesive, an acrylic pressure sensitive adhesive, or the like may be formed between the sheet material 34 and the base material 33 in attachment. Other than the above, the previous warping layer 35 may be formed on the side of the cold cathode tube of the base material 33, and the previous warping layer 35 placed on the side of the cold cathode tube may have a linear expansion coefficient higher than that of the base material 33.

(17) In the above described embodiments, the previous warping of the diffuser plate is performed, but the diffuser plate can be predicted to be warped toward the cold cathode tube without previous warping in some cases according to design of a backlight. In such a case, a diffuser plate that is not subjected to previous warping can be used. Other than the above, for example, when the optical member is partially pressed from the side of the liquid crystal panel to forcedly warp and deform the diffuser plate toward the cold cathode tube, a diffuser plate that is not subjected to previous warping can be used.

(18) In the above described embodiments, the cold cathode tube is exemplified as the light source, but the present invention may be applied to a case including a different type of linear light source such as a hot cathode tube or a fluorescent tube or a point light source such as an LED as a light source.

(19) In the above described embodiments, the liquid crystal display device using the liquid crystal panel as a display panel is exemplified, but the present invention can be applied to a display device using a different type of display panel.

(20) In the above described embodiments, the television receiver apparatus including the tuner is exemplified, but the present invention can be applied to a display device that does not include a tuner.

## Claims

1. A lighting device for a display device comprising:
a chassis housing a light source that applies a light to a display panel that displays an image;
a planar optical member provided on an emission side of the light emitted from the light source; and
a support portion that is mounted to said chassis and can support said optical member from the side of said light source,
wherein a plurality of said support portions have point shapes with respect to a surface of said optical member, are arranged in the surface in a distributed manner, and include a lower support portion and a higher support portion that support said optical member at different heights, and said lower support portion is placed on a middle side of said optical member and said higher support portion is placed on an end side of said optical member.

2. The lighting device for a display device according to claim 1, wherein said support portions are configured to support said optical member at gradually increasing heights from the middle side toward the end side of said optical member.

3. The lighting device for a display device according to claim 1 or 2, wherein said support portions are arranged in a zigzag manner.

4. The lighting device for a display device according to any one of claims 1 to 3, wherein when said optical member has a rectangular shape, said support portions are linearly arranged in a short side direction of said optical member.

5. The lighting device for a display device according to any one of claims 1 to 4, wherein when said optical member has a rectangular shape, said support portions are linearly arranged in a long side direction of said optical member.

6. The lighting device for a display device according to any one of claims 1 to 5, wherein among said support portions, a support portion placed closest to an end of said optical member and a support portion adjacent thereto support said optical member at the same height.

7. The lighting device for a display device according to any one of claims 1 to 6, wherein said support portions are tapered.

8. The lighting device for a display device according to any one of claims 1 to 7, wherein said support portions have surfaces with white base color.

9. The lighting device for a display device according to any one of claims 1 to 8, wherein each of said support portions includes a mounting plate mounted to said chassis, and a light source gripping portion that can grip said light source is provided on the mounting plate in a lateral position of said support portion.

10. The lighting device for a display device according to any one of claims 1 to 9, wherein said optical member is subjected to previous warping so as to be warped and deformed toward said light source as said light source is lit.

11. The lighting device for a display device according to claim 10, wherein said previous warping includes heating treatment of a surface on the side opposite to said light source of a base material of said optical member.

12. The lighting device for a display device according to claim 10, wherein said previous warping includes forming a previous warping layer constituted by beads on one of a surface on the side of said light source and a surface on the opposite side of the base material of said optical member by coating, and one of the previous warping layer and the base material placed on the side of said light source has a linear expansion coefficient higher than that of the other placed on the opposite side.

13. The lighting device for a display device according to claim 10, wherein said previous warping includes attaching a previous warping layer formed of a sheet material to one of the surface on the side of said light source and the surface on the opposite side of the base material of said optical member, and one of the previous warping layer and said base material placed on the side of said light source has a linear expansion coefficient higher than that of the other placed on the opposite side.

14. A display device comprising:
a lighting device for a display device according to any one of claims 1 to 13, and
a display panel placed on a front side of the lighting device for a display device.

15. The display device according to claim 14, wherein said display panel is a liquid crystal panel formed by sealing a liquid crystal between a pair of substrates.

16. A television receiver apparatus comprising a display device according to claim 14 or 15.
